(19) Europäisches Patentamt
European Patent Office
Office européen des brevets

(11) **EP 2 508 368 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(51) Int Cl.:
*B60G 21/055* (2006.01)   *B60G 17/02* (2006.01)
*B60G 11/44* (2006.01)

(21) Anmeldenummer: **12002282.7**

(22) Anmeldetag: **29.03.2012**

(54) **Federungsanordnung für Radaufhängungen von Kraftfahrzeugen**

Suspension assembly for wheel suspensions in motor vehicles

Agencement de ressort pour suspensions de roues de véhicules automobiles

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011 DE 102011016540**

(43) Veröffentlichungstag der Anmeldung:
**10.10.2012 Patentblatt 2012/41**

(73) Patentinhaber: **Audi AG**
**85045 Ingolstadt (DE)**

(72) Erfinder: **Michel, Wilfried**
**93339 Riedenburg (DE)**

(74) Vertreter: **Asch, Konrad**
**AUDI AG**
**Patentabteilung**
**85045 Ingolstadt (DE)**

(56) Entgegenhaltungen:
DE-A1- 10 148 095      DE-A1-102009 005 899
US-A- 2 991 088       US-A- 3 228 489
US-A1- 2010 013 175    US-A1- 2010 225 083

**Beschreibung**

Die vorliegende Erfindung betrifft eine Federungsanordnung für Radaufhängungen von Kraftfahrzeugen gemäß dem Oberbegriff des Patentanspruchs 1, wie bekannt aus DE-A-10148095.

Eine solche Federungsanordnung ist auch aus der DE 10 2009 005 899 A1 bekannt. Die Federungsanordnung weist eine mittels eines Aktuators betätigbare Drehstabfeder auf, die sich in der Fahrzeugquerrichtung bis etwa in die Fahrzeugquermitte erstreckt und radseitig auf einen Antriebshebel wirkt, der wiederum an einem Radführungselement der Radaufhängung angelenkt ist. In der DE 10 2009 005 899 A1 ist die Drehstabfeder mehrteilig sowie in verschachtelter Anordnung ausgeführt, bei der zwei radial äußere Hohlstäbe sowie ein radial innenliegender Vollstab aus Federstahl vorgesehen sind, die über zum Beispiel Keilverzahnungen miteinander kraftübertragend verbunden sind.

In dem aus der DE 10 2009 005 899 A1 bekannten Drehfedersystem wird die Federarbeit im Wechselspiel der Ein- und Ausfederbewegung des Rades aufgenommen bzw. abgegeben. Gleichzeitig ist es möglich, mittels des Aktuators Momente zu überlagern, das heißt die Drehfedern je nach Erfordernis aufzuziehen oder zu entspannen. Durch das Vorhandensein der Tragfeder als eine Hauptfeder müssen mit dem Drehsteller nur anteilig Stellkräfte zur Radlaständerung gestellt werden. Es findet ständig eine Überlagerung der Federkräfte aus Hauptfeder und Drehfeder statt, und zwar je nach dem wie die Fahrsituation dies erfordert und die Steuerung dies vorgibt. Am Ausgang des Drehfedersystems befindet sich eine Schwinge, an deren Ende eine Koppel angelenkt ist. Die Koppel verbindet die Schwinge mit dem Trapezlenker, der mit dem Fahrzeugrad verbunden ist. Somit können die im Drehsteller erzeugten Drehmomente über den Lastpfad/Motor/Getriebe/- Drehfeder/ Schwinge/Koppel/Trapezlenker/Fahrzeugrad letztlich als lineare Stellkräfte auf das Fahrzeugrad übertragen werden.

Bei dem oben dargelegten Drehfedersystem setzt sich die Drehstabfeder lediglich aus zwei Komponenten, nämlich aus Rohrfeder und Vollstabfeder, zusammen. Die Drehschwinge, das heißt der Abtriebshebel, kann auch flexibel und sogar als Blattfeder ausgeführt sein. Besteht nun bei starren Abtriebshebel Bedarf, eine weichere Drehstabfeder zu realisieren, so müsste als erste Maßnahme der Durchmesser von Rohrfeder und/oder Vollstabfeder reduziert werden. Mit dem Reduzieren des Durchmessers würde jedoch das Arbeitsvermögen des Drehfederstabes abnehmen und würden gleichzeitig auch die Spannungen überproportional zunehmen, so dass die Rohr- und Stabfeder verlängert werden müssten. Eine solche Längenänderung ist jedoch aufgrund der äußerst kritischen Platzverhältnisse im Bereich der Radaufhängung nicht durchführbar. Dies hat zur Folge, dass insbesondere bei kleineren Fahrzeugbaureihen, bei denen eine Reduzierung der Gesamtfedersteifigkeit unumgänglich ist, ein derartiger Drehsteller aufgrund der hohen Packungsdichte nicht eingebaut werden kann.

Ein Abtriebshebel mit verjüngendem Querschnitt wird in US-A-2991088 gezeigt.

Aufgabe der Erfindung ist es, eine Federungsanordnung der gattungsgemäßen Art vorzuschlagen, bei der mit baulich und konstruktiv einfachen Mitteln die Federrate der Drehstabfedern zusätzlich beeinflussbar ist.

Die Lösung dieser Aufgabe ist in den Merkmalen des Patentanspruchs 1 angeführt. Vorteilhafte und besonders zweckmäßige Ausgestaltungen der Erfindung beinhalten die Unteransprüche.

Erfindungsgemäß wird vorgeschlagen, dass der an den Drehfederstab anschließende Abtriebshebel nicht mehr starr ohne Federeigenschaft, sondern als Biegefeder mit definierter Federrate ausgebildet ist. Damit werden in einfacher Weise den Drehstabfedern in Reihenschaltung Biegefedern nachgeschaltet bzw. überlagert, die die Federrate der Federungsanordnung absenken und die Torsionsbelastungen der Drehstabfedern vermindern. Daraus resultiert, dass ggf. im Durchmesser geringere, gewichtsgünstigere Drehstabfedern verwendbar sind.

Das geschachtelte Drehfedersystem bestehend aus der Rohrfeder und der Vollstabfeder wird daher mit dem Abtriebshebel als eine dritte federnde Komponente erweitert. Dadurch kann unter Beibehaltung der geometrischen Abmessungen, das heißt der Länge des Drehfedersystems, die Gesamtfederrate nach unten korrigiert werden. Entsprechend kann der Drehsteller auch bei kleineren Fahrzeugbaureihen verbaut werden, in denen eine Reduzierung der Gesamtfedersteifigkeit der Radaufhängung erforderlich ist.

Erfindungsgemäß sind die Abtriebshebel als Biegeträger gleicher Biegespannung ausgeführt. Dies ermöglicht eine gewichtsoptimierte Konstruktion der Abtriebshebel aus Federstahl, mit gleichmäßig verteilter Bauteilspannung.

Die etwa horizontal ausgerichteten Abtriebshebel sind erfindungsgemäß in an sich bekannter Weise über vertikale Koppelstangen an den Radführungselementen angelenkt sein, wobei sich die Querschnitte der Abtriebshebel beginnend von der Befestigung an der Drehstabfeder zu den Koppelstangen hin verjüngen. Die vertikal ausgerichteten Koppelstangen stellen zudem sicher, dass auf die Biegefedern keine von den Radführungselementen im Fahrbetrieb ausgehende, verkantende Störmomente ausgeübt werden.

Erfindungsgemäß sind die Abtriebshebel im Querschnitt zumindest teilweise rechteckförmig mit aufrecht stehendem Profil ausgeführt. Sie können dabei in ihrer Höhe und/oder in ihrer Breite sich entsprechend verjüngen und dabei konstruktiv auf das jeweilige Belastungsprofil angepasst sein.

Die Abtriebshebel können bevorzugt kegelstumpfförmig aus Rundfederstahl ausgeführt sein.

In einer besonders bevorzugten Ausgestaltung der Erfindung können die Abtriebshebel und die Aktuatoren in an sich bekannter Weise radseitig jeweils außen positioniert sein, wobei die Drehstabfedern ausgehend von den Aktuatoren als Rohrfeder der Fahrzeugmitte zu verlaufen, dort trieblich mit Vollstäben verbunden sind, die zurückverlaufend durch die Aktuatoren hindurch mit den außen liegenden Abtriebshebeln mittelbar oder unmittelbar verbunden sind.

Des Weiteren können die Drehstabfedern wie eingangs aufgeführt als Speicherfedern mit an den Radaufhängungen vorgesehenen, parallel geschalteten Tragfedern zusammenwirken, wobei die Tragfedern einerseits und die Drehstabfedern mit den als Biegefedern ausgeführten Abtriebshebeln andererseits eine an unterschiedliche Fahrzeugtypen und Fahrzeuggewichte gut anpassbare Gesamtfederrate der Federungsanordnung definieren.

Ein Ausführungsbeispiel der Erfindung ist im Folgenden mit weiteren Einzelheiten näher erläutert. Die schematische Zeichnung zeigt in:

Fig. 1     eine Draufsicht auf die untere Ebene einer linksseitigen Radaufhängung an Hinterachsen von Kraftfahrzeugen, mit einem unteren Querlenker, einem Stoßdämpfer und einer Federungsanordnung, die aus einer Drehstabfeder und einer Biegefeder gebildet ist, die über einen elektromotorischen Aktuator verstellbar sind;

Fig. 2     ein Ersatzschaltbild der Federungsanordnung nach Fig. 1 mit Darstellung der Einzelfederraten $c_1$ und $c_2$, die im Wesentlichen die Gesamtfederrate bestimmen; und

Fig. 3     eine Seitenansicht auf die Drehstabfeder, den Aktuator und den als Biegefeder ausgeführten, über eine Koppelstange auf den Querlenker wirkenden Abtriebshebel der Speicherfeder.

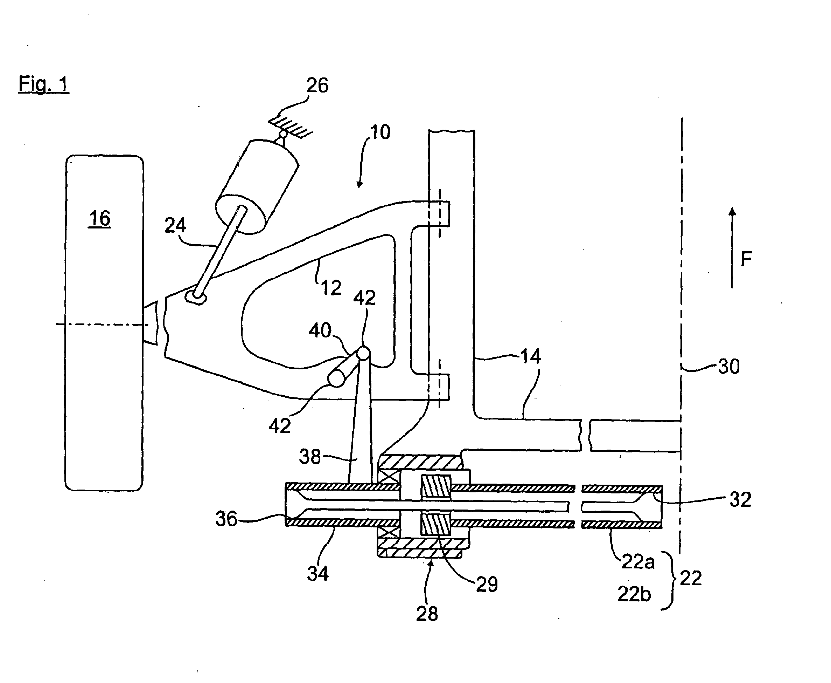

In der Fig. 1 ist mit 10 die untere Ebene einer linksseitigen Radaufhängung für Kraftfahrzeuge bezeichnet, mit einem unteren Querlenker 12, der einerseits an einem nur abschnittsweise dargestellten Hilfsrahmen 14 und andererseits an einem nicht dargestellten Radträger für ein Hinterrad 16 angelenkt ist. Der den Radträger führende obere Querlenker oder Lenker ist nicht ersichtlich.

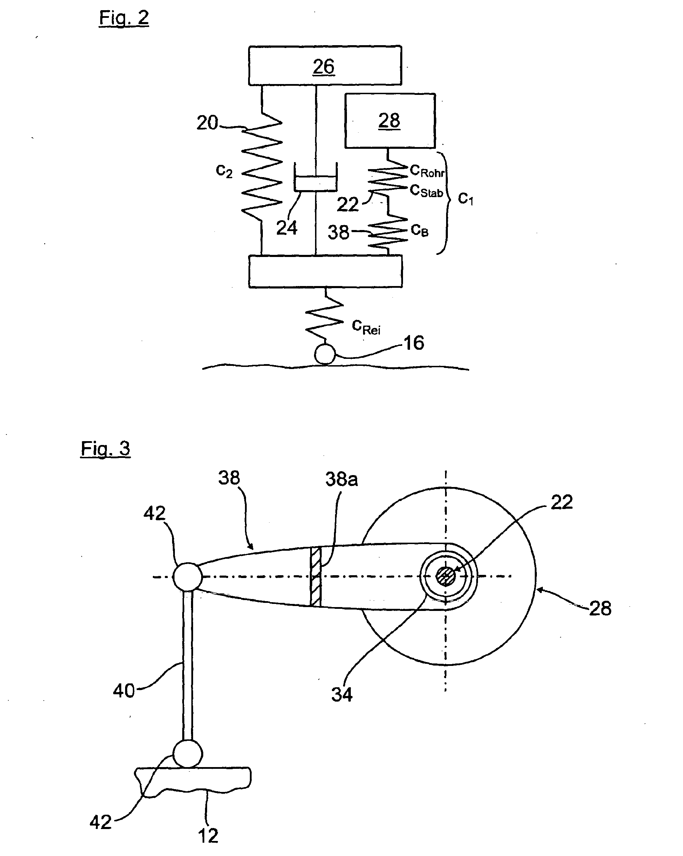

Die in der Fig. 1 gezeigte, linksseitige Radaufhängung weist einen Stoßdämpfer 24 mit davon getrennter Tragfeder 20 auf, die lediglich in dem Ersatzmodell der Fig. 2 gezeigt ist. Die erfindungsgemäße Federungsanordnung setzt sich gemäß der Fig. 1 aus einem in Fahrzeugquerrichtung verlaufenden Drehstab 22 als Speicherfeder noch zu beschreibender Konstruktion zusammen.

Der Teleskopstoßdämpfer 24 ist an dem unteren Querlenker 12 und oben in nicht näher dargestellter Weise am Aufbau 26 des Kraftfahrzeuges abgestützt, an dem auch der Hilfsrahmen 14 über schwingungsisolierende Lager befestigt ist.

Die Drehstabfeder 22 besteht aus einer radial äußeren Rohrfeder 22a, die ausgehend von einem am Hilfsrahmen 14 befestigten Aktuator 28 sich nach innen nahezu bis zur eingezeichneten, senkrechten Fahrzeuglängsmittelebene 30 erstreckt und dort zum Beispiel über eine Steckverbindung 32 mit einem Vollstab 22b aus Federstahl trieblich verbunden ist.

Der Vollstab 22b verläuft radial innen liegend wieder zur Fahrzeugaußenseite, wobei er sich durch den Aktuator 28 hindurch erstreckt und an einer noch weiter außenliegenden Führungsbuchse 34 über ebenfalls eine Steckverbindung 36 befestigt ist.

Die Führungsbüchse 34 ist in dem Aktuator 28 drehbar gelagert und trägt einen radial zum Querlenker 12 in Fahrtrichtung F des Kraftfahrzeuges nach vorne abragenden Abtriebshebel 38, der über Lagerstellen 42 und eine etwa vertikal ausgerichtete Koppelstange 40 gelenkig mit dem Querlenker 12 verbunden ist.

Der Aktuator 28 setzt sich in nur grob mit Bezugsziffer 29 angedeuteter Weise aus einem antreibenden Elektromotor und einem hoch übersetzenden Getriebe (zum Beispiel einem Harmonic-Drive-Getriebe oder einem Zykloidgetriebe) zusammen, wobei das Abtriebselement des Getriebes mit der Rohrfeder 22a trieblich verbunden ist. Die die Federrate mitbestimmende Länge des wirksamen Drehstabes 22 bestimmt sich somit kumulativ aus der Länge der Rohrfeder 22a vom Aktuator 28 zur Steckverbindung 32 und der Länge des Vollstabes 22b zwischen den Steckverbindungen 32, 36.

Zusätzlich ist der Abtriebshebel 38 (vergleiche auch Fig. 3) als Biegefeder aus Federstahl ausgeführt, deren Federrate in Reihenschaltung der Drehstabfeder 22 überlagert ist.

Der Abtriebshebel 38 ist als ein Biegeträger gleicher Biegespannung berechnet und ausgeführt und weist im Ausführungsbeispiel einen rechteckförmigen Querschnitt 38a auf, dessen größere Breite wie ersichtlich ist vertikal verläuft, und der sich ausgehend von seiner Befestigung an der Führungsbuchse 34 zur Koppelstange 40 hin beständig verjüngt und als Bauteil gleicher Biegespannung ausgebildet ist.

Ein solcher Biegeträger gleicher Biegespannung ist hinsichtlich einer optimalen Werkstoffausnutzung von Vorteil. An jeder Stelle des Abtriebshebel-Querschnittes herrschen somit gleich große Biegespannungen. Nicht erforderliches Material kann daher eingespart werden. Der Abtriebshebel kann als ein Freiträger mit einseitig fester Einspannung sowie mit Einzellast an dessen Ende betrachtet werden. Dadurch, dass die Stellkraft über die Koppel am Ende des Biegeträgers weitergeleitet wird, werden auch keine zusätzlichen Biegemomente in den Biegeträger, das heißt den Abtriebshebel, eingeleitet. Der Querschnitt des Abtriebshebels 38 kann zur Einspannstelle kontinuierlich zunehmen, so dass alle Querschnitte des Trägers in seiner Längserstreckung einer gleich großen Biegespannung unterliegen. Ein derartiger Träger gleicher Biegespannung stellt damit ein Optimum für den Kraftfluss dar und spart darüber hinaus unnötigen Materialeinsatz. Insgesamt bestimmt sich der Querschnitts-Verlauf des Abtriebshebels 38 nach den Platzverhältnissen. Beispielhaft kann der Abtriebshebel 38 als nicht erfindungsgemäßen Alternativ auch mit kreisrundem Querschnitt etwa kegelstumpfförmig ausgeführt sein.

Die Fig. 1 zeigt die linksseitige Radaufhängung 10 mit der Federungsanordnung 20, 22 des Kraftfahrzeuges, die rechte Seite ist sich spiegelbildlich gleich vorzustellen.

Über den Aktuator 28 kann bei entsprechender Ansteuerung dessen in beide Drehrichtungen betreibbaren Elektromotors zum Beispiel über ein elektronisches Fahrstabilitätsprogramm nach Maßgabe fahrdynamischer Parameter die Vorspannung der Speicherfedern 22, 38 zu den parallel angeordneten Tragfedern 20 ausgehend von einer Grundauslegung erhöht oder vermindert werden, um in an sich bekannter Weise das Fahrzeugniveau zu verändern oder einer Wank- und/oder Nickneigung des Fahrzeuges entgegenzuwirken.

Die Fig. 2 zeigt in dem Ersatzschaltbild das Zusammenwirken der Federungsanordnung 20, 22 der beidseitigen Radaufhängungen 10 unter Verwendung der gleichen Bezugszeichen.

Wie ersichtlich ist, sind zwischen dem Aufbau 26 des Kraftfahrzeuges und dem Rad 16 bzw. dem Querlenker 12 die parallel geschalteten Federsysteme $c_2$ (Tragfeder 20) und $c_1$ (Drehstabfeder 22 und in Reihenschaltung Biegefeder 38) wirksam, die die Gesamtfederrate bestimmen (eingezeichnet ist der Vollständigkeit halber auch die Federrate $c_{Rei}$ des Rades 16 bzw. dessen Reifens).

Durch die Reihenschaltung der Drehstabfedern 22 mit den als Biegefedern ausgeführten Abtriebshebeln 38 kann die über den Aktuator 28 gesteuerte Federrate $c_1$ als Speicherfeder und damit verbunden die Gesamtfederrate $c_2 + c_1$ vermindert bzw. vorteilhaft an konstruktive Gegebenheiten angepasst werden.

Im Einzelnen berechnet sich die Gesamtfederkonstante des in Fig. 2 gezeigten Systems nach folgender Formel:

$$\frac{1}{c_{ges}} = \frac{1}{c_{Rei}} + \frac{1}{c_{12}},$$

ist, und

$$\frac{1}{c_1} = \frac{1}{c_{Rohr}} + \frac{1}{c_{Stab}} + \frac{1}{c_B},$$

mit

$c_{ges}$    Gesamtfederkonstante des Systems
$c_{Rei}$    Federkonstante des Reifens 16

$c_1$    Federkonstante der Drehfeder (Speicherfeder)
$c_2$    Federkonstante der Tragfeder 20
$c_{Rohr}$    Federkonstante der Rohrfeder 22a
$c_{Stab}$    Federkonstante der Vollstabfeder 22b
$c_B$    Federkonstante des Abtriebshebels 38

Daraus geht hervor, dass die Federsteifigkeiten vom Fahrzeugreifen mit $c_{Rei}$, von der Tragfeder 20 mit $c_2$ und von der Speicherfeder mit $c_1$ in die Berechnung einfließt. Bei der Berechnung der Gesamtfederkonstante $c_1$ der Speichefeder wird erfindungsgemäß zusätzlich der als Biegefeder ausgestaltete Abtriebshebel 38 berücksichtigt, wodurch sich eine Reihenschaltung ergibt, bestehend aus der Rohrfeder 22a, der Vollstabfeder 22b und dem Abtriebshebel 38. In der obigen Formel findet daher auch der dritte Bruch $1{:}c_B$ für den Abtriebshebel 38 Berücksichtigung, wodurch nach Auflösen der Formel nach $c_1$ sich eine im Vergleich zum Stand der Technik reduzierte Gesamtfederrate für die Speicherfeder ergibt.

## Patentansprüche

1. Federungsanordnung für eine Radaufhängung eines Kraftfahrzeuges, mit einer Drehstabfeder (22), die über einen Aktuator (28) in ihrer Vorspannung verstellbar ist, wobei die quer verlaufende Drehstabfeder (22) radseitig auf einen Abtriebshebel (38) wirkt, der jeweils an einem Radführungselement (12) der Radaufhängung mittelbar angelenkt ist, wobei zumindest der Abtriebshebel (38) als eine Biegefeder definierter Federrate ausgebildet ist, **dadurch gekennzeichnet, dass** der Abtriebshebel (38) als Biegeträger gleicher Biegespannung ausgeführt ist, und dass jeder der etwa horizontal ausgerichteten Abtriebshebel (38) über eine vertikale Koppelstange (40) an dem Radführungselement (12) angelenkt ist, wobei sich der Querschnitt des jeweiligen Abtriebshebels (38) beginnend von der Befestigung an der Drehstabfeder (22) zu der Koppelstange (40) hin verjüngt, und dass
der Abtriebshebel (38) im Querschnitt zumindest teilweise rechteckförmig mit aufrecht stehendem Profil (38a) ausgeführt sind.

2. Federungsanordnung nach Anspruch 1, **dadurch gekennzeichnet, dass** die Abtriebshebel (38) und die Aktuatoren (28) radseitig jeweils außen positioniert sind, wobei die Drehstabfedern (22) ausgehend von den Aktuatoren (28) als Rohrfeder (22a) der Fahrzeugmitte (30) zu verlaufen, dort trieblich mit Vollstäben (22b) verbunden sind, die zurückverlaufend durch die Aktuatoren (28) hindurch mit den Abtriebshebeln (38) mittelbar oder unmittelbar verbunden sind.

3. Federungsanordnung nach Anspruch 1 oder 2, **dadurch gekennzeichnet, dass** die Drehstabfedern (22) als Speicherfedern mit an den Radaufhängungen (10) vorgesehenen, parallel geschalteten Tragfedern zusammenwirken, wobei die Tragfedern einerseits und die Drehstabfedern (22) mit den als Biegefedern ausgeführten Abtriebshebeln (38) andererseits die Gesamtfederrate definieren.

## Claims

1. Suspension assembly for a wheel suspension in a motor vehicle, having a torsion bar spring (22) that is adjustable in its pretensioning by means of an actuator (28), the torsion bar spring (22) which extends transversely acting, on the wheel side, on an output lever (38) which is indirectly linked in each case to a wheel guiding element (12) of the wheel suspension, at least the output lever (38) being embodied as a flexible spring of a defined spring rate, **characterised in that** the output lever (38) is constructed as a bending beam of the same bending stress, and **in that** each of the substantially horizontally aligned output levers (38) is linked to the wheel guiding element (12) by means of a vertical coupling rod (40), the cross-section of the respective output lever (38) tapering from the attachment to the torsion bar spring (22) to the coupling rod (40), and **in that** the output lever (38) is at least partially rectangular in cross-section with an upstanding profile (38a).

2. Suspension assembly according to claim 1, **characterised in that** the output levers (38) and the actuators (28) on the wheel side are each positioned on the outside, the torsion bar springs (22), starting from the actuators (28), extending as tubular springs (22a) to the centre (30) of the vehicle, where they are drivingly connected to solid bars (22b) passing back through the actuators (28) and directly or indirectly connected to the output levers (38).

3. Suspension assembly according to claim 1 or 2, **characterised in that** the torsion bar springs (22) cooperate as storage springs with parallel-connected support springs provided on the wheel suspensions (10), while the support springs on the one hand and the torsion bar springs (22) with the output levers (38) embodied as flexible springs on the other hand define the overall spring rate.

## Revendications

1. Ensemble de ressorts pour une suspension de roue d'un véhicule automobile, comprenant une barre de torsion (22), qui peut être déplacée dans sa précontrainte par l'intermédiaire d'un actionneur (28), la barre de torsion (22) s'étendant de manière transversale agissant côté roue sur un levier mené (38) qui est articulé indirectement respectivement au niveau d'un élément de guidage de roue (12) de la suspension de roue, au moins le levier mené (38) étant réalisé sous la forme d'un ressort de flexion à taux d'élasticité défini, **caractérisé en ce que** le levier mené (38) est réalisé sous la forme d'un support de flexion à contrainte de flexion identique, et **en ce que** chaque levier mené (38) orienté approximativement de manière horizontale est articulé au niveau de l'élément de guidage de roue (12) par l'intermédiaire d'une tige de couplage (40) verticale, la section transversale du levier mené (38) respectif se rétrécissant en commençant au niveau de la fixation au niveau de la barre de torsion (22) jusqu'à la tige de couplage (40), et **en ce que** la section transversale du levier mené (38) est réalisée de manière à présenter au moins en partie une forme rectangulaire avec un profilé vertical (38a).

2. Ensemble de ressorts selon la revendication 1, **caractérisé en ce que** le levier mené (38) et les actionneurs (28) sont positionnés côté roue respectivement à l'extérieur, les barres de torsion (22) s'étendant depuis les actionneurs (28), en tant que ressort tubulaire (22a) en direction du centre du véhicule (30), étant en liaison d'entraînement à cet endroit avec des barres pleines (22b), lesquels sont reliées aux leviers menés (38) indirectement ou directement tout en s'étendant en retour à travers les actionneurs (28).

3. Ensemble de ressorts selon la revendication 1 ou 2, **caractérisé en ce que** les barres de torsion (22) coopèrent en tant que ressorts accumulateurs avec des ressorts porteurs prévus au niveau des suspensions de roue (10), montés en parallèle, les ressorts porteurs d'un côté et les barres de torsion (22) dotées des leviers menés (38) réalisés sous la forme de ressorts de flexion de l'autre côté définissant le taux d'élasticité global.

Fig. 1

EP 2 508 368 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10148095 A
- DE 102009005899 A1
- US 2991088 A